# EUROPEAN PATENT APPLICATION

(11) **EP 4 831 066 A1**
(43) Date of publication of application: **28.10.2026**
(21) Application number: 25172019.9
(22) Date of filing: 23.04.2025
(51) Int. Cl.: B64F 1/28, B67D 7/04, B67D 7/40

(54) **AN AIRCRAFT FUELLING SYSTEM**

(71) Applicant: Atcomex BV, 9860 Scheldewindeke (BE)
(72) Inventor: Vanderveken, Sven, 9280 Denderbelle (BE)
(74) Representative: De Clercq & Partners

(57) **Abstract**

The system includes a ground hose (2) that is wound on a reel (4) configured to rotate about an essentially upright rotation axis (9). The system may be incorporated in a fuel dispensing vehicle (1) configured to be positioned in the vicinity of a parked aircraft. The system further comprises a top hose assembly configured to be coupled to the ground hose (2) and to the tank of the aircraft. The ground hose (2) is wound up on the reel without generating an axial rise while each winding being positioned adjacent a previous winding. Preferred embodiments include a ground hose comprising multiple hoses forming channels (2a,2b) placed one on top of the other, to enable at the same time a high fuel flow rate and a limited diameter of the wound-up hose, so that the wound-up hose does not exceed for example the width of the fuel dispensing vehicle. In the multi-channel hose, the channels (2a,2b) may be attached to each other through a plurality of wheeled hose trolleys (5).

## Description

### Field of the invention

This invention relates to a system for dispensing aviation fuel to an aircraft. The invention is in particular related to a system which can be connected to an airport apron fuel hydrant located at a distance from a parked aircraft.

### Background to the invention

During refuelling of an aircraft in an airport refuelling area (often referred to as an airport apron), large amounts of fuel must be moved quickly from a hydrant system which is most often an in-ground fixed system, into the tank of the aircraft. The in-ground system comprises an underground fuel pit and a hydrant incorporated in the plane of the apron. Typically, a movable refuelling vehicle is driven to a position close to the aircraft. The hydrant is located at a safe distance from the parking position of the aircraft. The vehicle includes a hose or tubing system that can be deployed and coupled to the hydrant for moving fuel from the underground pit to a refuelling hose coupled to the aircraft tank.

Different types of tubing systems are known in the state of the art. Patent publication document US 4,658,873 for example describes a pantograph system, wherein a construction of aluminium tubes and swivels is located in a storage position on one side of the fuelling vehicle. The tubes are deployed to bridge the gap between the fuelling vehicle and the hydrant. This system has a number of drawbacks. For example, if the pantograph system is located on the side of the fuelling vehicle facing the aircraft body instead of the hydrant, the pantograph system needs to be positioned such that it goes around the fuelling vehicle first and then to the hydrant system. If only a limited number of swivels are foreseen in the pantograph system, it is possible that the coupler of the fuelling system is not able to reach the hydrant and the fuelling vehicle will need to be repositioned. Also, when using such a pantograph system, it is often needed to deploy the entire pantograph system and position it on the apron thus blocking a clear passage for other vehicles which also need access to the aircraft to provide servicing. Finally, such a pantograph system is located on the side of the fuelling vehicle and thus increases the width of the vehicle significantly, which makes it sometimes difficult to position the fuelling vehicle relative to the aircraft.

A second prior art system, illustrated for example in patent publication document US 2,600,876 is equipped with a flexible hose rolled up on a vertical reel which allows easy unrolling of the hose and more flexibility in terms of the vehicle position. The problem with these systems however is that dragging the hose along the apron to the hydrant manually is only feasible for small hose diameters. Larger diameters are however required for faster refuelling times and the manual handling of such large diameter hoses is difficult or impossible. Additionally, if large diameter hoses are used, this will have a significant impact on the total height of the vehicle, which may have the effect that the vehicle is no longer able to park underneath the aircraft wing to refuel. Also, the dragging of the hose along the surface results in excessive wear and therefore a short lifespan of the hose. This solution is therefore unsuitable for refuelling large aircrafts quickly.

Combined systems including both a pantograph and a flexible hose incorporated in a refuelling vehicle also exist in the art. In these systems, the flexible hose is wound around the vehicle, which however increases the width of the vehicle to a significant extent. Also, the storage of the flexible hose around the vehicle may hinder the driver entering or exiting from the driver's cabin, and it may require specific attachment means for ensuring that the hose remains firmly secured when the vehicle is in motion.

### Summary of the invention

The invention is related to a fuel dispensing system as described in the appended claims. The system provides solutions to the problems described above. The system includes a ground hose wound on a reel configured to rotate about an upright rotation axis. When the ground hose is wound up on the reel, the windings are therefore lying horizontally or slightly tilted, preferably at an angle of maximum 20° or 10° relative to the plane of an airport apron onto which the dispensing system is positioned. The system may be incorporated in a fuel dispensing vehicle configured to be positioned in the vicinity of a parked aircraft. The system further comprises a top hose assembly configured to be coupled to the ground hose and to the tank of the aircraft. The top hose assembly may be in accordance with any design known in the art. The ground hose is wound up on the reel in a flat winding manner, each winding being positioned adjacent a previous winding. Embodiments include a ground hose comprising multiple hoses forming channels placed one above the other, to enable at the same time a high fuel flow rate and a limited diameter of the wound-up hose, so that the wound-up hose does not exceed for example the width of the fuel dispensing vehicle. In the multi-channel hose, the channels may be disposed in a fixed spatial relation to each other at a plurality of discrete locations along the longitudinal length of the ground hose by a wheeled hose trolley at each discrete location. According to preferred embodiments, these trolleys have multiple parts which fit around the channels of the ground hose, and which can be quickly assembled or disassembled.

A ground hose in accordance with the invention enables bridging the gap between the aircraft and an in-ground hydrant of an underground fuel pit without the drawbacks of the prior art : the flexible hose can be easily configured so that it does not exceed the width of a standard refuelling vehicle in the wound-up state. The fact that no rigid tubing is used makes it easier to position the ground hose, even if the vehicle is not placed in the most ideal position. The flexible hose is more easily displaceable and represents less of an obstacle for other servicing operations compared to a pantograph system.

### Figures

Figure 1a illustrates an aircraft refuelling vehicle equipped with a fuel dispensing system according to an embodiment of the invention, provided with a horizontally wound ground hose. Figure 1b is a top view of the wound-up hose and its main constituent parts, in relation to the circumference of the vehicle's chassis. All other components of the vehicle and of the dispensing system have been omitted in this top view.
Figures 2a to 2c illustrate additional views of the ground hose or parts thereof, including a vertical section view through the centre of rotation of the ground hose reel.
Figure 3 is an enlarged detail of the section view of Figure 2c, showing one of the wheeled trolleys attached to the ground hose.
Figures 4a and 4b illustrate an embodiment of the invention wherein a spring rod is mounted between two consecutive trolleys supporting the ground hose.
Figure 5 illustrates an embodiment wherein a chain is attached to the trolleys supporting the ground hose.
Figure 6 illustrates the ground hose in a partially unwound state, with the hydrant coupler positioned above an in-ground hydrant.

### Detailed description of invention

Before the present system and method of the invention are described, it is to be understood that this invention is not limited to particular systems and methods or combinations described, since such systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical range" b" endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In the present description of the invention, reference is made to the accompanying drawings that form a part hereof, and in which are shown by way of illustration only of specific embodiments in which the invention may be practiced. Parenthesized or emboldened reference numerals affixed to respective elements merely exemplify the elements by way of example, with which it is not intended to limit the respective elements. Unless otherwise indicated, all figures and drawings in this document are not to scale and are chosen for the purpose of illustrating different embodiments of the invention. In particular the dimensions of the various components are depicted in illustrative terms only, and no relationship between the dimensions of the various components should be inferred from the drawings, unless so indicated.

It is to be understood that other embodiments may be utilised and structural or logical changes may be made without departing from the scope of the present invention. The following detailed description, therefore, is not to be taken in a limiting sense, and the scope of the present invention is defined by the appended claims.

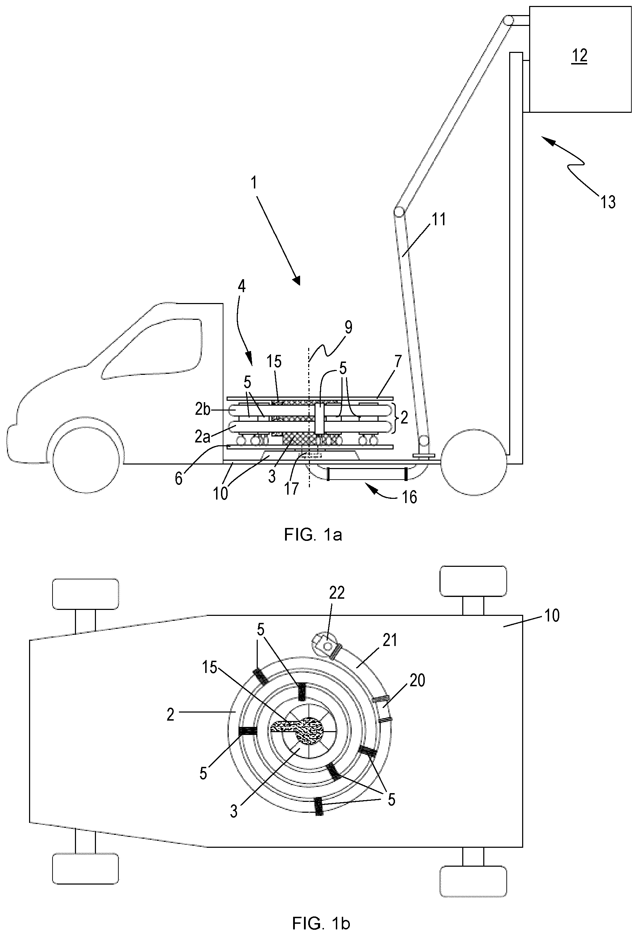

Figure 1a is a conceptual image of a fuel dispensing system according to an embodiment of the invention, incorporated in a fuelling vehicle (1) for dispensing fuel to a large aircraft parked on an airport apron. The invention is however applicable to aircraft of any size, and the represented vehicle is merely one example of a possible application.

The vehicle (1) is configured to be driven to a position under a wing of the aircraft, said wing containing an aircraft fuel tank with a fuel connection on the underside of the wing. The system is configured to enable the dispensing of fuel from the hydrant of an underground fuel pit to the aircraft tank, the hydrant being located at a safe distance from the parking location of the aircraft. The system is optionally applicable for removing fuel from the aircraft tank and channelling it to a fuel tank on the ground or on board the same or another vehicle.

The fuel dispensing system comprises a ground hose (2) configured to be coupled to the hydrant. As seen in Figures 1a and 1b, the ground hose (2) is wound on the drum (3) of a reel (4) configured to rotate about an upright axis (9) when the fuel dispensing system is positioned on a horizontal airport apron. The rotation axis (9) of the reel may be vertical or slightly tilted with respect to the vertical direction. For example, the angle between said rotation axis (9) and the horizontal ground level may be between 70° and 90°, more preferably between 80° and 90°.

In the embodiment shown, the ground hose (2) comprises two flexible hoses (2a) and (2b), hereafter referred to as the channels of the two-channel ground hose (2). The channels are mounted one above the other, and disposed in a fixed spatial relation to each other at a plurality of discrete locations along the longitudinal length of the ground hose by a plurality of wheeled trolleys (5), embodiments of which will be described in more detail further in this text. The invention is not limited to this two-channel embodiment and also includes embodiments comprising more than two channels as well as an embodiment comprising a single-channel ground hose, as will also be described later in this text. It is seen that in the wound-up state, the trolleys (5) are supported on a lower support disc (6) that may be fixed to or uniform with the drum (3), at the lower end thereof. In the embodiment shown, a corresponding plate (7) is present at the upper end of the reel, but such a top plate could be omitted or replaced by a spoked wheel or the like.

In the configuration shown in Figures 1a and 1b, the horizontal reel (4) is rotatably mounted on the chassis (10) of the vehicle and configured so that when the ground hose (2) is wound onto the reel (4), it does not substantially increase the vehicle's width. The ground hose (2) is wound on the reel (4) in a flat winding manner, i.e. each winding of the hose is adjacent a previous winding, thereby increasing the diameter of the hose portion that is wound onto the reel without generating an axial rise. As a result, there is essentially no axial increase or rise in the reel height caused by the winding, allowing the system to retain a low profile for positioning below the aircraft wing. In addition, this facilitates the winding and unwinding operations of the hose (2).

The fuel dispensing system further comprises a top hose assembly coupled to the ground hose (2) and arranged to be connected to the aircraft's fuel tank. Any top hose assembly known in the art can be applied in the system of the invention, and the configuration shown in Figure 1a is merely a non-limiting example applicable for fuelling large airplanes, and including a connecting element (11) comprising tubes and swivels coupled to the cabin (12) of an elevator (13). Incorporated in the cabin (12) may be one or more flexible hoses (not shown), which can be attached to the aircraft's fuel tank by an operator carried upward in the cabin (12). This configuration is known as such and drawn in a simplified and schematic way. Other top hose assemblies applicable in a dispensing system according to the invention include a vertical hose reel (having a horizontal axis) which may be suitable for fuelling smaller airplanes.

The two-channel ground hose (2) is configured to be coupled at one side to the connecting element (11). This is done through a collector (15) having two inlets and a single outlet, and which may be brought into practice according to any suitable design. In the image shown in Figure 1a, the collector (15) is coupled to a tube assembly (16) by a swivel connection (17) that enables the collector (15) to rotate together with the reel (4) relative to the tube assembly (16). The connecting element (11) is coupled to the other end of the tube assembly (16). The tube assembly (16) represented in Figure 1a is again merely an example of a possible connection between the ground hose (2) and the top hose assembly, and alternative configurations are included in the scope of the invention.

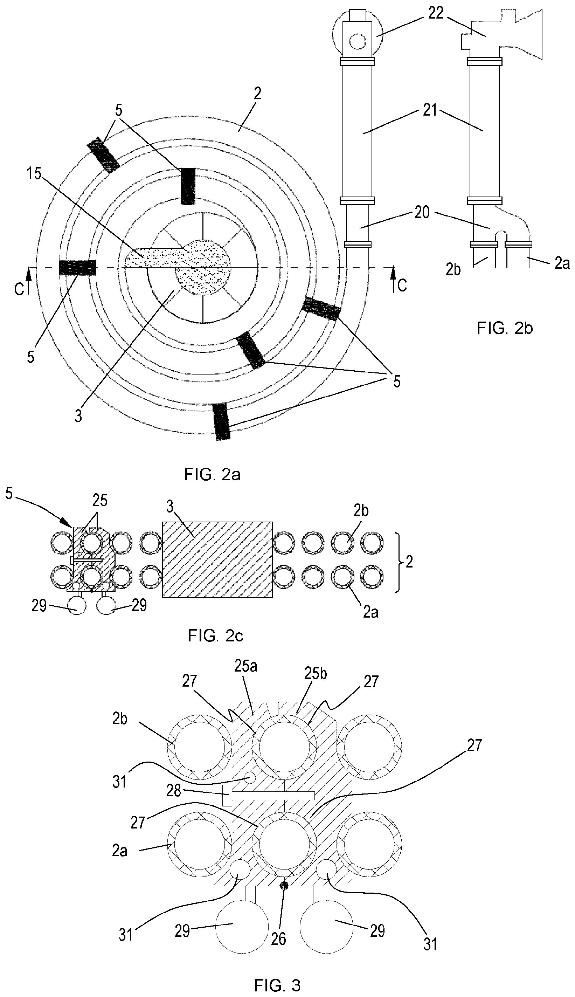

At the other side, the ground hose (2) is configured to be coupled to an in-ground hydrant, i.e. a hydrant incorporated in the apron floor and configured to provide access to an underground fuel pit. To this aim, and with reference also to Figures 2a and 2b, a connector piece (20) couples the ends of the two channels (2a) and (2b) to one end of a flexible intake tube (21), connected at its other end to a hydrant coupler (22) configured to be fixed onto the in-ground hydrant. The coupler (22) can be any type of coupler known in the art.

The section view shown in Figure 2c and the enlarged image in Figure 3 illustrate one embodiment of a hose trolley (5) in accordance with the invention. The trolley comprises a body (25) formed of two parts (25a) and (25b) connected by a hinge (26) at their lower end. Each of the trolley parts comprises two mutually facing half-circular cavity portions (27) designed to closely envelop the channels when the trolley parts are assembled. The respective parts (25a, 25b) thus co-operate to form a cavity configured for a fitting attachment to the exterior of the channels (2a, 2b) at discrete locations along the longitudinal length of the hose (2) to provide for a fixed spatial relation between the channels (2a, 2b). This assembly is realized by one or more lateral bolt connections (28). Other type of connections to realize the assembly are possible, such as clamps, snap-fit connections, rivets, magnetic fastening connections, etc.

Underneath the body (25), a set of wheels (29) is mounted which may for example be castor wheels or pallet wheels. The hinged design enables the easy removal of the trolleys (5) for maintenance or replacement, or for displacing the trolleys along the length of the hose (2).

However, other designs are possible instead of the hinged design. The two parts (25a,25b) could be provided with interlocking clamp portions, which can be easily attached to each other or detached from each other.

Also in the embodiment shown, openings (31) are provided in the body (25), for enabling the passage of electric cables, pneumatic tubes and/or hydraulic hoses and/or reinforcement cables or wires.

The rotation of the reel (4) for winding or unwinding the ground hose is preferably motorised, i.e. actuated by a motor which may be an electric, pneumatic or hydraulic motor (not shown in the drawings). According to preferred embodiments, the motorized rotation of the reel (4) can be controlled by the operator who is handling the hydrant coupler (22), through controls provided on or near said coupler (22), and connected to the reel (4) through electric, pneumatic or hydraulic cables passing through the holes (31) in the consecutive trolleys (5).

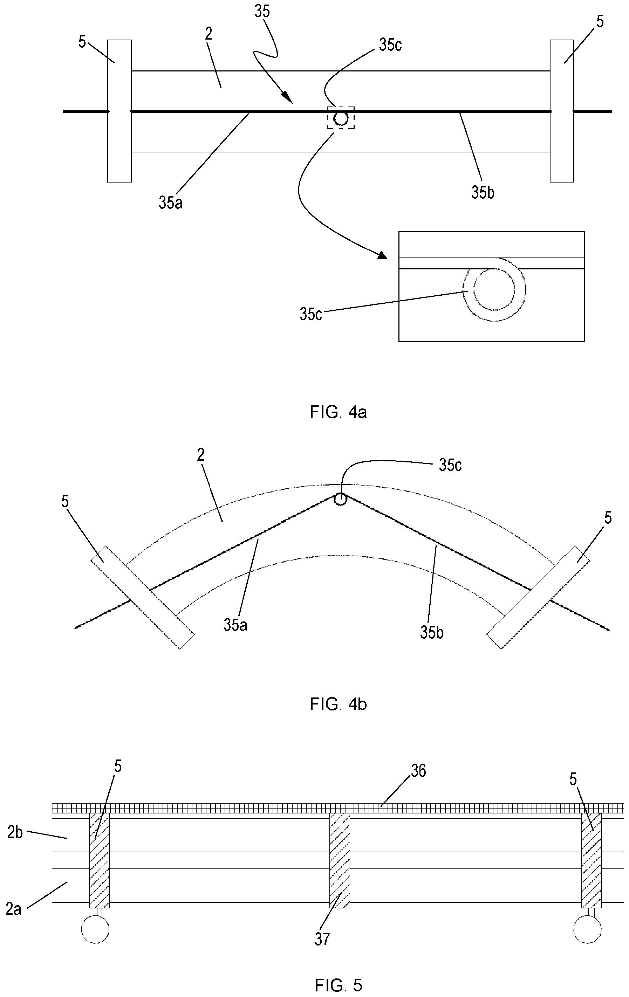

According to an embodiment, the ground hose (2) is further equipped with one or more spring rods, each spring rod being attached to at least two consecutive trolleys (5), which force the ground hose portion connecting said trolleys to become straight as soon as the hose (2) is unwound from the reel (4). Figure 4a shows a top view of a portion of the ground hose (2) extending between two trolleys (5). As illustrated by the enlarged detail, the spring rod (35) is in fact a torsion spring comprising a first leg (35a), a second leg (35b), and a spring coil (35c) connecting the first and second legs. The opposite ends of the rods are attached to the respective trolleys (5), for example slidably and rotatably inserted through a hole in the trolleys (5). The spring rod is in the relaxed state when the legs (35a,35b) are substantially colinear, as illustrated in Figure 4a. The coil spring (35c) is tensioned when the hose (2) is bent as illustrated in Figure 4b. So when the hose is wound up on the reel (4), the spring is effectively forced into a tensioned state. When the hose is unwound from the reel, the spring force brings the spring rod back to its straight shape, thereby forcing the portion of the hose (2) to become straight as well. It is to be understood that even when the spring rod is it its relaxed state, a certain tension may still remain in the spring rod to keep the hose (2) in a straightened position. The spring rod may be attached above the ground hose (2) as shown in the drawings, but also on the underside or laterally with respect to said hose (2).

According to another embodiment, the hose (2) is further equipped with one or more tensioning element, each tensioning element being attached to at least two consecutive trolleys (5), which apply a straightening force to a portion of the ground hose disposed between two consecutive trolleys when the hose (2) or portion thereof is unwound from the reel (4). Preferably, the tension exerted by the tensioning element is adjustable such that a correct amount of tension can be applied to the hose (2) to position it straighten when unwounded from the reel (4).

According to an embodiment, the ground hose (2) is equipped with a chain. Each wheeled trolley is attached to the chain, while the chain is configured to bend only in a plane of the windings of the wound-up ground hose (2) so that the chain applies a straightening force to the hose when the hose is unwound.

Reference is made to Figure 5. The chain (36) is attached to the top of the trolleys (5). It is a chain known as such in the art, which can bend in one direction only. The chain is attached to the trolleys in such a manner that it bends in the plane of the wound-up ground hose (2) and therefore does not resist the winding or unwinding of the hose. However, as the chain cannot bend otherwise, it keeps the hose straightened in a horizontal plane when the hose is unwound, i.e. it prevents the hose from bending downward between two consecutive trolleys (5) when the hose is rolled out on the airport apron. According to a preferred embodiment illustrated in Figure 5, additional clamps (37) are provided in between consecutive trolleys (5), with the chain (36) attached also to said clamps (37). This allows to reduce the total number of wheeled trolleys (5).

According to a further embodiment, the system comprises a motorized sprocket wheel configured to engage with the chain (36) and drive the winding or unwinding of the ground hose (2).

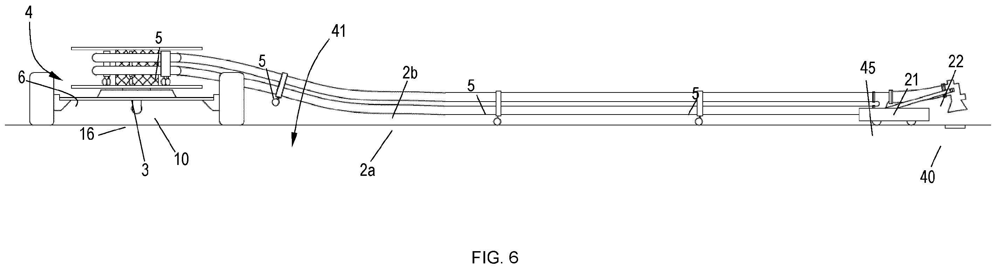

Figure 6 illustrates how the ground hose (2) is unwound from the reel (4) in order to bring the hydrant coupler (22) in the direct vicinity of an in-ground hydrant (40) incorporated in the airport apron (41). The top hose assembly is not shown in the drawing. The trolleys (5) enable rolling the heavy two-channel hose (2) along the apron. When the reel (4) is motorized, the manipulation of the hose (2) on the apron is facilitated as the motorized unwinding pushes the unwound hose forward or pulls the hose back towards the reel (4) when the hose is wound up on said reel.

Figure 6 schematically indicates a wheeled apparatus (45) coupled to the end of the ground hose (2) and configured to support the flexible tube element (21) and facilitate the handling of the hydrant coupler (22) for placing said coupler (22) onto the hydrant (40). Apparatuses having this function are known in the art, and referred to sometimes as a 'pit buddy'. The pit buddy (45) is shown in a simplified and conceptual way and its precise design may be in accordance with known types of this particular apparatus. According to a preferred embodiment of the invention however, a pit buddy (45) is provided which has motorized wheels and further comprises controls which enable an operator to actuate at least the forward motion of the pit buddy, i.e. towards the fuel hydrant (40). When the end of the ground hose (2) is mounted on this pit buddy, the forward motion thereof thus pulls the ground hose towards the fuel hydrant (40), thereby unwinding it from the reel (4). If the pit buddy is configured to be driven in both directions, the backward motion of the pit buddy pushes the hose back, thereby forcing it to be wound back onto the reel. This actively driven pit buddy can thus be applied instead of a motorized reel (4). Alternatively, the system may be equipped with a motorized reel (4) and with a motorized pit buddy.

A fuel dispensing system according to the invention can be incorporated in a fixed manner in a vehicle (1) as illustrated in the drawings. It can also be a standalone module including a support structure onto which the ground reel (2) and the top reel assembly are mounted. The module can be displaced by a suitable transportation means and positioned in the vicinity of an aircraft, or the module can be mounted on a vehicle in a removable manner, so that the vehicle may be used for other servicing purposes besides refuelling.

As already mentioned, the invention also includes a fuel dispensing system equipped with a single-channel hose wound up in the same manner as described above, but when the cross-section diameter of the single channel is large in order to enable a high fuel flow rate, the space required for accommodating the wound-up hose quickly becomes excessive and therefore likely to exceed the width of the vehicle. This is the main reason why according to preferred embodiments, the ground hose (2) comprises multiple channels placed one above the other. For example, the use of two VHD75C hoses from supplier Elaflex is suitable for forming a two-channel hose applicable in a system according to the invention. These hoses have an inner cross-section diameter of 75 mm and an outer diameter of 93 mm, enabling the same flow rate as a single channel formed of a VHD100C type hose, which has inner and outer diameters of 100 mm and 118 mm respectively. The two-channel solution however enables a hose length of about 20 m having a diameter of the wound-up hose that does not exceed 2 m, so that it fits within the width of a standard refuelling vehicle. This aspect of fitting within the vehicle width is an advantage of the invention enabled by specific embodiments thereof, but not a limitation of the invention as such.

In a multi-channel embodiment according to the invention, the channels may be connected to each other by any suitable connection, i.e. not necessarily by wheeled trolleys. As stated, the wheeled trolleys could have any other suitable design apart from the hinged design illustrated in the drawings.

## Claims

1. An aircraft fuel dispensing system for dispensing fuel from a fuel hydrant (40) to the tank of an aircraft, when the aircraft is parked on an airport apron (41) at a given distance from the hydrant, the system comprising :
• a top hose assembly configured to be coupled to said aircraft tank,
• a ground hose (2) configured to bridge a distance between the hydrant (40) and the top hose assembly, and coupled to said top hose assembly so that fuel can flow from the ground hose to the top hose assembly,
• a reel (4) for winding the ground hose (2) onto said reel or unwinding the ground hose from said reel,
**characterized in that** :
- the rotation axis (9) of the reel (4) is essentially in an upright orientation when the system is positioned on the aircraft apron (41),
- the ground hose (2) is configured to be wound onto the reel (4) without generating an axial rise.

2. The system according to claim 1, wherein the ground hose (2) is a multi-channel hose, comprising two or more flexible channels (2a,2b) placed one above the other and being disposed in a fixed spatial relation to each other at a plurality of discrete locations along the longitudinal length of the ground hose (2) and wherein the system is configured to conduct a flow of fuel by dividing said flow between the channels.

3. The system according to claim 2, wherein at each discrete location, the fixed special relation is realised by a wheeled trolley (5).

4. The system according to claim 3, wherein the wheeled trolley (5) comprises a body (25) formed of two or more parts (25a,25b), each part comprising a cavity portion (27), wherein the respective parts co-operate to form a cavity configured for a fitting attachment to an exterior of the ground hose (2) at the discrete location.

5. The system according to claim 3 or 4, further comprising one or more spring rods (35) coupled between at least two consecutive trolleys (5) and configured to apply a straightening force to a portion of the ground hose (2) disposed between the two consecutive trolleys (5) when said portions are unwound from the reel (4).

6. The system according to claim 5, wherein each spring rod (35) comprises a torsion spring, each torsion spring comprising a first leg (35a), a second leg (35b) and a spring coil (35c), wherein the spring coil (35c) connecting mutually facing ends of the first and second leg, the other ends of the legs being slidably and rotatably attached to respective trolleys (5).

7. The system according to any one of claims 3 or 4, further comprising a chain (36) , wherein each wheeled trolley (5) is attached to the chain (36), wherein said chain (36) is configured to bend only in a plane of the windings of the wound-up ground hose (2) so that the chain (36) applies a straightening force to the ground hose when the ground hose (2) is unwound.

8. The system according to claim 7, further comprising a motorized sprocket wheel configured to engage with the chain (36) and drive a winding or unwinding of the ground hose (2).

9. The system according to any one of the preceding claims, further comprising a wheeled apparatus (45) configured to support a coupler (22) coupled to the ground hose (2) and configured to be connected to the fuel hydrant, wherein at least a forward motion of said wheeled apparatus (45) is motorized.

10. An aircraft refuelling vehicle (1) equipped with a system according to any one of claims 1 to 9.

11. An aircraft refuelling module comprising a system according to any one of claims 1 to 9.
